# EUROPEAN PATENT SPECIFICATION

(11) **EP 0 541 747 B1**
(45) Date of publication and mention of the grant of the patent: **25.08.1999**
(21) Application number: 92910727.4
(22) Date of filing: 01.06.1992
(51) Int. Cl.: C08L 43/04, C08K 5/54

(54) **CROSS LINKABLE POLYMERIC COMPOSITION**
Vernetzbare Polymerzusammensetzung
COMPOSITION POLYMERE RETICULABLE

(30) Priority: 31.05.1991 GB 9111754; 31.05.1991 GB 9111755
(43) Date of publication of application: 19.05.1993
(73) Proprietor: BOREALIS A/S, 2800 Lyngby (DK)
(72) Inventor: Lien, Klaus, CH-1217 Meyrin (CH); Reid, Wlliam Bain, Linlithgow EH49 7SR (GB)
(74) Representative: Bannerman, David Gardner
(86) International application number: GB9200981
(87) International publication number: WO9221721

(56) References cited:
- EP-A- 0 054 923
- EP-A- 0 173 278
- EP-A- 0 307 954
- EP-A- 0 347 540

## Description

The present invention relates to crosslinkable organic polymer compositions. More particularly the present invention is concerned with crosslinkable compositions comprising organic polymers containing hydrolysable silane groups, which polymers can be thermoformed into shaped articles, for example cable insulation or pipe, and subsequently crosslinked by contacting the articles with water or steam in the presence of a so-called "silanol condensation catalyst".

It is known that organic polymers containing hydrolysable silane groups can be crosslinked by the action of water, preferably in the presence of a silanol condensation catalyst. A number of methods are known for producing such crosslinkable organic polymers. One method comprises copolymerising unsaturated organic monomers, for example, ethylenically unsaturated or vinyl monomers, with unsaturated silane compounds containing hydrolysable groups. Examples of this method are described in GB-A-2028831 and GB-A-2039513 which disclose the preparation of crosslinkable copolymers of ethylene and an ethylenically unsaturated silane compound by copolymerising the monomers at relatively high temperatures and pressures in the presence of a free radical polymerisation initiator. Another example of this copolymerisation method is described in GB-A-1415194 which discloses the preparation of crosslinkable copolymer by contacting ethylene and a terminally unsaturated silane compound, optionally with other olefinically unsaturated comonomer, with certain defined Ziegler catalysts under polymerisation conditions which preferably employ relatively low temperatures and pressures.

It is also known that polymers crosslinkable by the action of water and a silanol condensation catalyst can be prepared by grafting an unsaturated silane compound on to a preformed polymeric material. Grafting processes of this type can be carried out by heating together a base polymer, for example polyethylene, an unsaturated silane compound bearing one or more hydrolysable groups, a grafting initiator and optionally a silanol condensation catalyst, under conditions such that the unsaturated silane compound is grafted on to the base polymer. Examples of this method are disclosed in GB-A-1357549, GB-A-1234034, GB-A-1286460, US 3802913, US 4117063, US 4136132 and US 4228255. Examples of commercial processes which employ a grafting reaction of this type are the SIOPLAS and the MONOSIL processes. (SIOPLAS and MONOSIL are registered trade marks). In the SIOPLAS process, the base polymer is heated with the unsaturated silane in the presence of a grafting initiator and the product is extruded and pelleted to produce a pelleted silane-grafted thermoplastic polymer. The pelleted polymer can then be fed with a silanol condensation catalyst added as such or, preferably via a masterbatch blend of polyethylene and said catalyst to a thermoforming process for fabricating shaped products. These shaped products are then crosslinked by exposure to water or steam. In the MONOSIL process eg as described in US 4117195 and US 4351790, the base polymer, the unsaturated silane, the grafting initiator and the silanol condensation catalyst are fed simultaneously to a special extruder eg as described in GB 964428 in which grafting occurs "in situ" and crosslinkable products, eg cable or pipe, are directly extruded; EP 0163865A describes another 1 step process. These products can be crosslinked by exposure to steam or water under the influence of the silanol condensation catalyst.

Other known methods for forming polymeric materials having hydrolysable silane groups are the "transesterification" methods wherein a copolymer having exchangeable functions such as alkoxy groups-(as, for example, in ethylene/ethyl acrylate copolymer) or carboxylate groups (as, for example, in ethylene/vinyl acetate copolymer) is treated with a suitable silane compound in the presence of a special ester-exchange catalyst.

For example, European patent application 4752 discloses a method for the production of water-curable silane-modified alkylenealkyl-acrylate copolymers which comprises reacting an alkylenealkylacrylate copolymer, e.g. ethylene-ethyl acrylate, with a silane in the presence of an organotitanate catalyst, e.g. titanium tetraisopropylate. Examples of suitable silane compounds which can be used in this method are acetoxy propyl trimethoxy silane, acetoxy propyl triethoxy silane, methacryloxypropyl trimethoxy silane, acryloxypropyl trimethoxy silane, methacryloxypropyl triethoxysilane and acryloxypropyl triethoxy silane. In another example of the transesterification method ethylene/vinyl acetate copolymer can be reacted with a suitable silane compound bearing hydrolysable groups and having esterified carboxylic acid groups which exchange with the acetate groups on the copolymer. A suitable silane compound is 4-[tri(m)ethoxysilyl] butanoic acid (m)ethyl ester.

Polysiloxane-modified copolymers prepared by reacting a mixture containing an alkylene-alkyl acrylate copolymer and a polysiloxane in the presence of an organo titanate catalyst are also known. For example, European Patent No. 49155 discloses the production of such polysiloxane-modified copolymers and European patent application EP 120115 discloses compositions comprising a polysiloxane and an organo titanate and the use thereof in the production of such polysiloxane-modified alkylene-alkyl acrylate copolymers.

EP-0307954 discloses a curable composition comprising a hydrolyzable silyl group-containing vinyl polymer, a silane compound and optionally a curing catalyst, which has useful adhesion to melamine resin coatings.

EP-0173278 discloses a room temperature-curable resin consisting of a vinyl polymer containing a basic nitrogen atom and a compound containing both an epoxy group and a hydrolizable silyl group.

EP-0054923 discloses a curable resin composition comprising a silyl group-containing vinyl resin having a hydrolyzable silicom atom; a tin compound; and one or more amines having in their molecule at least one silicon atom connected to a hydrolyzable group.

The present invention relates to crosslinkable organic polymers having pendant, hydrolysable silane groups. These polymers, are hereinafter referred to as "silyl polymers" may be prepared, as described above, by copolymerising unsaturated organic monomers with unsaturated silane compounds containing hydrolysable groups, by grafting an unsaturated silane compound on to a preformed polymeric material or by the transesterification methods using a monomeric silane, e.g. as disclosed in European patent application 4752. The silyl polymers can be fabricated to form a large variety of useful articles by conventional techniques, for example, extrusion, injection moulding, blow-moulding and film-blowing processes. The crosslinking step is generally carried out subsequent to fabrication of the article because the crosslinked polymer cannot in general be satisfactorily thermoformed.

A problem encountered-with silyl polymers is that during thermoforming operations the polymer can undergo premature crosslinking (also known as "scorching") which can lead to difficulties in the fabrication of articles from the polymer or to the production of articles having unsatisfactory physical and mechanical properties. The problem is particularly serious in the production of extruded wire and cable insulation wherein it is important to provide an extruded layer of insulation which is substantially free from surface roughness. Wire or cable insulation which has a relatively rough surface can suffer mechanical damage (for example, tearing and snagging) leading to insulation failure. The roughness can also lead to electrical stress and insulation breakdown in higher voltage applications.

One method of reducing premature crosslinking proposed in GB-A-1357549 is to mould or extrude articles from silyl polymers in the absence of the silanol condensation catalyst and then to contact the produced article with an aqueous dispersion or solution of a tin carboxylate to cause the crosslinking. However, in many applications it is preferred to include the silanol condensation catalyst as a component of the polymer composition as this leads in general to higher crosslinking rates and to more complete crosslinking particularly in articles having thick cross section.

Many other attempts to overcome the problems of premature curing have been described.

In EP-A-7765 a monomeric hydrolytically reactive organosilane, or orthoester, is described as moisture inhibitor for certain silicon containing copolymers while in EP-A-245938 the water scavenger is of formula R₃Si-[OSiR₂]R where R is hydrogen, hydrocarbyl or oxyhydrocarbyl and in WO-9007542 various types of long chain hydrocarbyl silanes including alkylene bis silanes are proposed. One problem with some known silanes is that they reduce the final cure rate as well as reducing the degree of premature curing.

It has now been discovered that certain silanes containingat least one heteroatom especially an N, S, O or P atoms or O in an epoxy group can reduce premature cross linking, usually without significantly reducing the cure rate in the presence of a silanol condensation catalyst and water.

A polymer composition for use in the manufacture of thermoformed shaped articles which comprises (i) a silyl polymer, which is a cross linkable organic polymer having pendant hydrolysable silane groups, and (ii) an inhibitor to inhibit premature cross linking characterised in that said inhibitor (ii) is a silane I which is at least one of (a) a silane II with at least 2 silicon atoms, each attached to at least one hydrolysable group and bonded together via an organic bridging group with at least one carbon backbone interrupted by at least one N, S, P or O atom, and (b) a silane III with at least one silicon atom attached to at least one hydrolyzable group and containing at least one epoxy group in a group bonded to Si containing 2-12 carbons.

The silyl polymer employed in the composition of the present invention is, as mentioned above, an organic polymer containing pendant hydrolysable silane groups which is cross linkable by the action of water in the presence of a silanol condensation catalyst. The polymer usually has a carbon backbone and especially substantially only a carbon backbone. The backbone preferably comprises at least a majority of, and preferably substantially only, hydrocarbon groups. In particular apart from the silane units the silyl polymer preferably comprises polymerised olefin units and especially substantially comprises said units. Suitable olefin units are those from aliphatic monoalpha olefins eg of 2-10 carbons such as ethylene, propylene butene-1, 4-methyl pentene-1, hexene-1, octene 1; preferably said olefin units are derived from one aliphatic alpha olefin especially ethylene but optionally with other aliphatic olefin units. Preferably the silyl polymer is an ethylene polymer containing pendant, hydrolysable silane groups. Such ethylene polymers can comprise up to 40% eg up to 30% by weight of comonomer units other than ethylene and silane units. Preferably however, the ethylene polymer comprises less than 10% by weight of such other monomers. Suitable further comonomers include, for example vinyl esters, alkyl (meth) acrylates, unsaturated ethers, unsaturated carboxylic acids and derivatives of (meth) acrylic acid and aromatic olefins such as styrene. Most preferably, the further comonomer, if present, is used in amount of from 1 to 20 per cent by weight of the total weight of the silane copolymer; however most preferably, the silyl polymer is a copolymer of ethylene units and silane units only. Preferred silyl polymers and references to their methods of manufacture are described above. Preferred silyl polymers are those prepared by copolymerising ethylene and an unsaturated silane compound having one or more hydrolysable groups preferably in the presence of a free radical initiator and optionally together with one or more other monomers copolymerisable therewith, or those prepared by graft copolymerising such an unsaturated silane on to a base polymer in the presence of a grafting initiator. Particularly preferred silyl polymers are those prepared by copolymerising ethylene and an unsaturated silane compound having one or more hydrolysable groups, optionally together with one or more other unsaturated compounds, at a temperature of 150 to 400°C and a pressure of 1000 to 4000 bar (100 to 400 MPa) in the presence of a free radical polymerisation initiator.

The hydrolysable ethylenically unsaturated silane compound copolymerised with the alpha-olefin or polymer thereof is preferably a compound having the general formula; R¹¹SiR¹²ₘY₃_ₘ wherein R¹¹ represents an ethylenically unsaturated hydrocarbyl or hydrocarbyloxy hydrocarbyl group each usually of 2-10, especially 2-6, carbon atoms, or an ethylenically unsaturated carboxy hydrocarbyl group eg with 3-18 carbons in the unsaturated carboxylic part and 1-10 eg 2-4 carbons in the hydrocarbyl part; R¹² represents an aliphatic saturated hydrocarbyl group (eg of 1-20 such as 1-6 carbon atoms or an aromatic hydrocarbyl group eg of 6-19 carbon atoms; Y represents a hydrolysable organic group eg of 1-15 carbon atoms and m is 0, 1 or 2. If the compound has more than one Y, the groups Y may be the same or different. Group Y may be an alkoxy group eg of 1-10 carbon atoms, acyloxy group eg of 1-10 carbon atoms or a mono or di alkylamino group having with 1-8 carbons in each alkyl group or a mono or diarylamino group with 6-13 carbons in each aryl group. Preferably R¹¹ is vinyl, allyl, isopropenyl, butenyl, cyclohexenyl or 3-acryloxy propyl or 3-methacryloxypropyl; preferably Y is methoxy, ethoxy, formyloxy, acetoxy, propionyloxy, alkylamino or arylamino; and preferably R¹² is methyl, ethyl, propyl, decyl or phenyl.

Particularly suitable unsaturated silane compounds are those having the general formula CH₂-CHSi(OZ)₃ wherein Z is a hydrocarbyl group having 1 to 8 carbon atoms, preferably 1 to 4 carbon atoms. Most preferably, the unsaturated silane is selected from the group consisting of vinyl trimethoxy silane, vinyl triethoxysilane and vinyl triacetoxy silane.

The silyl copolymer preferably contains from 0.01-10% such as 0.1 to 10% by weight, more preferably 0.5 to 5% or 0.7-2% by weight of copolymerised units or grafted units of the silane compound (based on the weight of silane copolymer). The Melt Index of the silane copolymer is usually 0.02 -50g/10 mins, e.g. 0.1-15 (measured according to ASTM D-1238 condition E, 190°C with 2.16 kg load as are all Melt Index figures given in this specification).

The silane II has at least 2 silicon atoms eg 2-6 silicon atoms per molecule but especially 2 or 3 silicon atoms. It is a monomeric silane as distinct from a polymeric silane and is not a olefin silane copolymer nor graft copolymer with pendant silane groups, nor a polymer with an Si-O-Si backbone. Silane II is not a silyl polymer. The silanes may be solid or liquid at 25°C, but are preferably solids with melting points not exceeding 180°C eg 100-180°C; their boiling points, if any, are usually above 100°C under 0.1 mm Hg pressure.

The silane of formula II is preferably of formula IV

[ R¹ ₐR² ₃₋ₐSiR³)_{b}X IV

where X is an O, Sₙ, N R⁴SiR⁵₃__{c}R⁶_{c}, PR⁴SiR⁵₃__{c}R⁶_{c}, NR⁷, PR⁷, NH(R⁸NH)_{d} or a heterocyclic group eg of 2-10 carbon atoms and at least one N, S or O ring atom, preferably with the or each free valency on the N atom, especially with 1-3 and especially 3 N ring atoms as in a 2,4,6-tricarbonyl-1,3,5-triazinyl group
each R¹ and each R⁶, which may be the same or different,
represents a group such that Si-R¹ or Si-R⁶ are hydrolisable with water
each R², each R⁵ and each R⁷, which may be the same or different, represents an alkyl, cycloalkyl, aryl or aralkyl group
each R³, each R⁴ and each R⁸ which may be the same or different, represents a divalent organic group,
each of a and c, which may be the same or different, is 1-3, preferably 3, b is at least 2 such as 2-4, preferably 2 or 3, d is 0 or 1-4 especially 1 and n is 1-6 especially 1, 2 or 4. When the silane of formula II contains more than one group R¹, each R¹ may be the same or different from another group R¹; the same applies in a similar manner to R² to R⁸.

Each of R¹ and R⁶ may be an alkoxy group of 1-14 carbons eg 1-8 carbons such as methoxy, ethoxy, propoxy, butoxy amyloxy hexoxy and octyloxy or 2-ethylhexyloxy or an alkoxyalkylene group with the alkoxy group as defined above and 1-6 carbons in the alkylene group eg 1,2-ethylene, or an acyloxy group eg of 1-10 carbons especially an alkanoyloxy group of 2-6 carbons such as formyloxy acetoxy or propionyloxy group, or an organo substituted amino group eg a mono or di alkyl or mono or di aryl amino group with 1-10 or 6-12 carbons respectively such as methyl amino or ethylamino or anilino, or an oximinogroup (formed from a ketoxime by removal of the hydroxylic hydrogen), such as a dialkyl ketoximino, cycloalkanonimino or diaryl ketoximino group, with 2-10, 4-8 or 12-30 carbons respectively, such as a ketoximino group from acetone, methylethyl ketone or benzophenone. If the silane contains more than one R¹ group, the groups R¹ may be the same or different.

Each of R², R⁵ and R⁷ may be an alkyl group eg of 1-14 such as 1-8 carbons such as methyl ethyl or butyl, a cycloalkyl group eg of 5-8 carbons such as cyclohexyl, an aryl group eg an aromatic hydrocarbyl group, and preferably of 6-19 carbons such as phenyl or tolyl or an aralkyl group eg an aralkyl hydrocarbyl group and preferably of 7-20 carbons such as benzyl.

Each of R³, R⁴ and R⁸ may be a divalent organic preferably hydrocarbyl group, such as an alkylene group eg of 1-12 carbon atoms especially 2-8 carbons, such as 1,2 ethylene, 1,3-propylene or 1,6-hexylene, or a cycloalkylene group eg of 5-7 carbons such as 1,4-cyclohexylene, an arylene group preferably of 6-14 carbons such as 1,4-phenylene or biphenylene, or an alkylene group interrupted by arylene or arylene interrupted by alkylene with the alkylene and arylene groups preferably as defined above, and especially a phenylene bis methylene group or a phenylene bis(1,2-ethylene group) or an alkylene bis(phenylene group) such as a propane 2,2(phenylene) group. Each of R³, R⁴ and R⁸ may also be aryl substituted alkylene eg of 7-14 carbons such as 2-phenyl-1,3-propylene, or alkylene eg of 2-14 carbons substituted by at least one hydroxy as in 2-hydroxy 1,3-propylene and/or interrupted by at least one oxygen atom as in 2-hydroxy-4-oxa-1,7-heptylene.

Particularly preferred compounds IV are those in which X comprises at least one N or S atom or group and especially those in which R³ (and R⁴ or R⁸ if present) is 1,2-ethylene or 1,3-propylene and a (and c if present) is 3. Examples of preferred compounds are bis [3-trialkoxy silyl propyl] mono, di or tetrasulphides, oramine or - oxide or - benzylphosphine (R⁷ is benzyl) or - N,N¹1,2-ethylenediamine, or tris (3-trialkoxy silyl propyl) triisocyanurate.

The epoxy silane (silane III) usually contains 1 Si atom per molecule and is preferably a compound which contains 1 or 2 epoxy groups per molecule, 1-3 especially 3 hydrolyzable groups bonded to Si and 0-2 especially 0 inert organic groups bonded to Si. Preferably the silane is of formula R²¹ₐR²²₃_ₐSiR²³, in which R²¹ represents a group such that Si-R²¹ is hydrolyzable with water, R²² represents an alkyl cycloalkyl, aryl or aralkyl group, R²³ represents an epoxy containing organic group of 2-12 carbon atoms and a is 1-3, especially 3.

R²¹ is preferably selected from groups as described for R¹ and R⁶ above. If the epoxy silane contains more than one R²¹ group, the groups R²¹ may be the same or different. R²² is preferably selected from groups as described for R², R⁵ and R⁷ above.

R³ may be an organic group with a carbon backbone, optionally interrupted by one or more oxygen atoms, said organic group also containing at least one epoxy group. Said organic group preferably contains 2-10 and especially 2-6 or 6-9 carbon atoms. R²³ may be an epoxy aliphatic group, e.g. an epoxy aliphatic hydrocarbyl group, especially one with a linear hydrocarbon backbone. The epoxy group may be internal in the epoxy aliphatic group but R²³ is preferably a terminal epoxy alkyl group such as 3,4-epoxybutyl or 1,2-epoxyethyl. R²³ may also be an epoxy cycloaliphatic or epoxycycloaliphatic-aliphatic group, e.g. with 5-8 carbons in the cyclo aliphatic part and 1-5 carbons with the aliphatic, e.g. alkyl part; examples of such groups are 3,4 epoxycyclohexyl and 2(3,4-epoxycyclohexyl)-ethyl. Especially preferred for R²³ are organic groups with a carbon backbone interrupted by an oxygen atom such as epoxyalkyl-oxyalkyl groups with 2-6 carbons in the epoxy alkyl and 1-8 especially 2 or 3 carbons in the oxyalkyl group; an example of the epoxyalkyl group is 2,3 epoxy propyl and examples of the oxyalkyl are 2-oxyethyl and 3 oxypropyl. 3-Glycidyloxypropyl is the preferred group for R²³. Specific examples of suitable silanes are 3,4 epoxy butyl trimethoxy and triethoxy silane, 2[3,4-epoxycyclohexyl]ethyl trimethoxy and triethoxy silane 3-glycidyloxypropyl trimethoxy and triethoxysilane and 2-glycidyl oxyethyl trimethoxy and triethoxy silane.

The presence of the silane I can inhibit the precure of the silyl polymer and, especially in the case of silane II, can increase the thermal properties of the cured silyl polymer, and the stability against copper, oxidative degradation and air ageing, so that it may be possible to use that silane as an inhibitor and metal deactivator, avoiding the need for any added deactivator.

The compositions of the invention preferably also contain a phenolic or amine antioxidant, in particular for stabilizing the shaped cured silane polymer during use, eg in a buried cable.

The phenolic or amine antioxidant is preferably an aromatic compound, which is an amine or hindered phenol. The sterically hindered phenol usually has at least one alkyl group eg of 1-6 carbons and especially 2 alkyl groups in an ortho position to the phenolic hydroxyl group. Secondary or especially tertiary alkyl groups are preferred such as isopropyl, isobutyl and isoamyl, but especially tert butyl. The aromatic compound may just have the hydroxy group substituent, and alkyl substituents, but preferablycontains at least one other substituent especially containing an ester group such as one with a long fatty alkyl chain eg of 8-20 carbons. Other hindered phenols have 2 or more phenolic rings either bonded together directly or via an oxygen -NH- or -Sor alkylene or alkylidene bridge eg of 1-6 carbon atoms. Other polyphenolic compounds are formaldehyde condensates of p- alkyl phenols and [bis(hindered phenolic ring) substituted] alkanoic esters of alcohols eg of 1-20 carbons such as stearyl alcohol or ethylene glycol. If desired the hindered phenol may contain enolizable groups such as -CONH- groups, as in hindered phenol oxamides or bis oxamides, hydrazides or bis hydrazides.

Examples of hindered phenols are 2,6 di-tertbutyl phenol, thio bisphenols such as bis (2 hydroxy 3 tert butyl 5 methylphenyl) sulphide and bis (2 methyl 4 hydroxy 5 tert butylphenyl) sulphide (eg sold as SANTONOX R product), alkylidene bis phenols such as methylene and ethylidene bis (methyl tert butyl 2 or 4 phenols), hydroxybenzyl compounds such as 4-hydroxy 3,5-ditert butyl benzyl compounds such as tris 2,4,6-(4-hydroxy-3,5-di tert butylbenzyl) durene (eg as sold as IRGANOX 1330 product) or tris[4-hydroxy 3,5-di tert.butyl benzyl]isocyanurate and amino phenols such as fatty acyl amino phenols and hydroxyphenyl propionates especially 3-[3,5-di-tert butyl 4-hydroxyphenyl]-propionates ester such as the mono ester of octadecanol (eg as sold as IRGANOX 1076 product) or the tetra ester of pentaerythritol (eg as sold as IRGANOX 1010 product))] the bis[bis 3-(3,5 di-tert butyl 4 hydroxyphenyl) propionic acid ester of ethylene glycol, or N,N1-bis-[3-(31,51-di tert butyl-4¹-hydroxy phenyl) propion] hydrazide (eg as sold as IRGANOX 1024 product).

The amine antioxidant is preferably aromatic and may be hindered with an alkyl group ortho to the amine group, but is preferably a secondary aromatic amine especially a bis (aromatic) amine wherein the aromatic groups are the same or different. Examples of hindered amines are secondary aromatic amines eg of 6-50 or 14-35 carbon atoms such as bis (4-alkyl phenyl) amines or bis [4(2'-phenylpropylidene) phenyl] amine. Other amine antioxidants are hindered N-heterocyclic compounds with at least one alkyl group eg of 1-6 carbon atoms and especially 2 alkyl groups in a ring carbon atom adjacent to N-heterocyclic atom. Secondary or tertiary alkyl groups are preferred such as isopropyl, isobutyl and isoamyl, but especially tertbutyl. Examples of the heterocyclic compounds are substituted piperidines, especially 2,6-dialkyl piperidines and their N-alkyl substituted derivatives.

The curable compositions usually contain 0.001-10% such as 0.01-10% eg 0.01-5% and especially 0.1-0.5% or 0.5-5% of the silane I and 0-10% preferably 0.01-10% and especially 0.1-0.5% of the amine or hindered phenol, based on the weight of the silyl polymer. The molar ratio of silane I to phenol or amine is usually 1-10:10-1 such as 1-4:9-6, while the weight ratio of silane I to phenol or amine is usually 1:30 to 10:1 eg 1:12 to 5:1 but especially 1:6 to 2:1.

The curable compositions usually contain at least an amount of the silane I effective to inhibit cure resulting with the presence of any traces of water in the starting components and with any moisture which enters the composition during storage handling or processing up to the time that water is deliberately added for cross linking.

The compositions of the invention preferably also contain a silanol condensation catalyst.

The term "silanol condensation catalyst" is used in this specification as is conventional in the art to refer to a catalyst for the hydrolysis of SiY eg Si-0 alkoxy groups in the silane copolymer and not in respect of catalysts for the condensation between Si-OH groups of silane copolymers.

Preferred classes of silanol condensation catalysts are organic and inorganic acids eg strong acids and alkalis and amines , and metal compounds of metals eg of Groups VIII or IB-IVB, for example complexes or carboxylates of lead, cobalt, iron, nickel, or zinc, or inorganic tin carboxylates or organotin carboxylates (which are preferred) eg diorganotin carboxylates wherein the organic group is preferably an aliphatic hydrocarbyl group eg an alkyl group of 1-20 carbon atoms eg 1-8 carbons such as butyl or octyl and the carboxylate is from an aliphatic hydrocarbyl saturated or ethylenically unsaturated mono or di carboxylic acid eg of 1-20 carbon atoms. Specific examples of the silanol condensation catalyst are dibutyl tin maleate, dibutyl tin dilaurate, dibutyl tin diacetate, dibutyl tin dioctoate, dibutyl tin dipalmitate, dibutyl tin distearate, dioctyl tin dilaurate, stannous acetate, stannous caprylate, lead naphthenate, zinc caprylate, cobalt naphthenate; ethylamines, dibutylamine, hexylamines, pyridine; inorganic acids such as sulphuric acid and hydrochloric acid; and organic acids such as toluenesulphonic acid, acetic acid, stearic acid and maleic acid. Mixtures of carboxylic acids with metal carboxylates eg carboxylates of tin may be used.

The quantity of silanol condensation catalyst employed in the crosslinkable composition of the present invention or applied direct to articles formed from the composition is suitably in the range 0.001 to 3.0 moles, preferably in the range 0.003 to 0.3 eg 0.005 to 0.05 moles per mole of silyl units in the silyl polymer.

The quantity of the silanol condensation catalyst generally is in the range of 0.001 to 10% by weight, preferably 0.01 and 5% by weight, most preferably 0.01-0.1 or 0.03 to 3% by weight, relative to the quantity of silyl polymer in the composition. The weight ratio of silanol catalyst to silane I may be 0.005-10:1 eg 0.01-1:1 or 0.01 - 0.3:1 or 0.5-5:1.

The composition of the present invention comprising the silyl polymer, and the precure inhibitor, optionally with a silanol condensation catalyst and/or any other ingredients of the composition, can be prepared by a variety of techniques including, for example, direct blending or compounding of the ingredients, the use of masterbatch techniques or by forming the silyl polymer "in situ" in the presence of the precure inhibitor.

The silanol condensation catalyst (and phenol or amine, if present) and optionally the silane I may be preblended in a masterbatch concentrate with a suitable inert thermoplastic polymer compatible with the silyl polymer, such as a polyethylene eg low density or linear low density polyethylene or ethylene vinylacetate or ethylene ethyl acrylate copolymer. Preferred inert polymers are low density polyethylene LDPE eg of Melt Index 0.1-10g/10 min and blends thereof with ethylene ethyl acrylate (EEA) copolymers eg with 5-40% wt units of ethyl acrylate, the blends containing at least 70% eg 80-95% of the LDPE and up to 30% eg 0.1-30% such as 5-20% EEA copolymer. The masterbatch may contain 0% or 0.01-10% eg 0.1-5% or 1-8% of the silane I and 0.01-10% eg 0.1-3% especially 0.3-1.0% of the silanol condensation catalyst and 0-40% of the hindered phenol or amine based on the weight of the inert polymer. The silane I may be in the masterbatch and/or in the silyl polymer composition. The masterbatch may contain other additives providing other properties to the masterbatch and thus the curable composition; examples of such additives are fillers such as chalk, talc, mica and silica, flame retardant material such as metal hydroxides eg aluminium hydroxide or magnesium hydroxide or conducting compounds such as carbon black, metal deactivators (eg salicylaldehyde oximes) lubricants, water tree inhibitors, foaming agents and pigments. If desired these other additives may be mixed directly with the silyl polymer rather than via a masterbatch. Preferably the masterbatch is prepared by blending the above ingredients with the inert polymer and then the masterbatch is blended with silyl polymer usually with amounts of 50-99 parts eg 80-98 parts of the latter blended with 1-50 parts of the former, especially 2-20 parts. The final curable compositions may contain 60-100% eg 90-99% of the silyl copolymer and 0-40% eg 1-10% of this inert polymer from the masterbatch. If desired the composition of the invention may be blended with compatible polymeric materials eg polyethylene, polypropylene, ethylene ethyl acrylate copolymer or ethylene alpha olefin copolymers eg LLDPE. The compositions of the invention including the masterbatch concentrate may be made by blending the polymer (i) with the other ingredients in an extruder, blender or mill and/or other ingredients which are liquid may be absorbed into the polymer granules, with elevated temperatures and/or use of intensive mixing to increase the rate of absorption of the liquids.

Instead of mixing preformed graft silyl polymer with the silane I and other ingredients if desired, it is also possible to prepare the cross linkable composition of the invention by grafting with unsaturated silane in situ in the presence of the silane I a base polymer, for example low density polyethylene, linear low density polyethylene, ethylene/ethyl acrylate copolymer or ethylene/vinyl acetate copolymer. The silane I can, for example, be added to the base polymer prior to or during the performance of the grafting reaction.

A crosslinkable composition according to the present invention comprising the silyl polymer, the silane I and, optionally other ingredients, can for example be prepared directly in the form of crosslinkable finished articles by extruding a base polymer, e.g. polyethylene, together with the silane, an unsaturated silane compound of the type described earlier in this specification, a free radical catalyst, i.e. initiator for grafting (e.g. an organic peroxide). This method can be applied for example in the well-known MONOSIL (RTM) process for the production of insulated wire and cable.

The composition of the present invention can be used to manufacture crosslinked products using the technology known in the manufacture of articles from conventional silyl polymers. For example, the composition can be used in blow-moulding, injection-moulding, film-blowing, calendering, extrusion, roto-moulding and extrusion-coating techniques. The composition is particularly preferred for wire and cable coating applications. Wire and cable insulations produced by extrusion coating using the composition of the present invention exhibit improved surface finish.

The compositions of the invention which comprise the silyl polymer and the silane I should preferably be prepared and maintained in a moisture free atmosphere until ready for use.

The compositions of the present invention can be crosslinked by exposure to water eg at 10-150°C and especially at 50-100°C. Cure times can be 0.1-500 hr, preferably 0.5-30 hr depending on the concentration of silanol condensation catalyst and the temperature. The crosslinking can be effected by simply storing under ambient conditions of temperature and humidity, storing in a humid atmosphere or by treating with water or steam or moisture. For example, the compositions can be crosslinked, normally after forming into shaped products, by being passed through a water bath, sprayed with water or stored, in a steam-filled cabinet. If desired the water bath may contain some ester antioxidant.

The water needed for hydrolysis and condensation of the silane groups can be included in the polymer composition. For example, water can be mixed into the polymer composition with another substance which is miscible with the polymer, eg propylene glycol, or the water can be physically or chemically bound to a substance which is miscible with the polymer eg in the form of water of crystallisation.

The present invention includes a method for forming a shaped, crosslinked product from the stabilised, crosslinkable composition of the present invention which method comprises thermoforming the product and then crosslinking by exposure to water. Preferably the thermoforming is extrusion coating of an electrical conductor. For example, reels or drums of wire or cable which have been extrusion-coated with a silyl polymer containing condensation catalyst are preferably exposed to moisture at elevated temperature to effect crosslinking of the silyl polymer. The exposure can take the form of immersion in a tank of hot water at about 80°C or exposure to low pressure steam at about 100°C in an enclosure commonly termed a "sauna". The length of time required to crosslink the silyl polymer to the extent that it will comply with the requirements of the appropriate specification depends on the time needed to raise the temperature of the wire or cable and the thickness of the silyl polymer coating. Typically, a reel containing 2 km of 25 mm² cable insulated with a 1.5 mm thick layer of silyl polymer will have to be treated for about 6-30 hours to achieve the desired degree of crosslinking using these techniques.

The invention is illustrated in the following Examples.

### Example 1

Ethylene was copolymerised with vinyl trimethoxy silane to give a low density polyethylene with 1.14 wt% vinyl trimethoxy silane (VTMS) units (hereafter called silyl polymer SLPE) of Melt Index (0.4 g/10 mins). The silyl polymer was compounded in a Brabender Plasticorder with or without a specified silane I and silanol condensation catalyst as specified below in an amount of 4% and 0.2% wt respectively at 150°C under nitrogen for 5 minutes to give a polymer composition.

Each polymer composition obtained was cut into small chips (about 2 x 2 x 2 mm) and analysed for gel content initially and then after immersion in water at 90°C for various times. The gel content, which is a function of the amount of crosslinking, was determined by a method based on ASTM D 2765 from the percentage not dissolved in boiling xylene at 140°C after 24 hours: in each case 20-30 chips were placed in pouches in the xylene. The gel content of chips in three such pouches were determined each time and an average obtained.

Silane I was thio [bis(propylene 3(trimethoxy silane)] sold as S1 165 by Degussa Ltd. The silanol condensation catalyst was based on commercial di n butyl tin maleate, which had absorbed water and been partly hydrolysed it is believed to form maleic acid, dibutyltin oxide and dibutyltin mono maleate; this partial hydrolysis provides a much more severe environment to test the efficiency of silane I as cure inhibitor than unhydrolysed material.

The results of the experiments were as follows.

| Example | SLPE Composition | Gel Content | | |
|---|---|---|---|---|
| | | Initial | After 5 hr | After 25 hr |
| 1 | 4% silane I 0.2% catalyst | 10% | 77 | 81 |
| A (comp) | 0.2% catalyst | 56% | 80 | 80 |

### Examples 2, 3, 4

The process of Ex 1 was repeated with SLPE compositions containing 1% silane I and 0.2% catalyst (Ex 2), 4% silane I and 0.2% catalyst (Ex 3) and 4% silane 1 (Ex 4). The results were as follows.

| Example | Gel Content After Time/hr | | | |
|---|---|---|---|---|
| | 0 | 1 | 5 | 120 |
| 2 | 30 | 72 | 77 | 81 |
| 3 | 3 | 64 | 74 | 80 |
| 4 | <1 | <1 | <1 | 14 |

### Ex 5-10 Comp Ex B

Pellets of the SLPE used in Ex 1 were mixed in a 95:5 weight ratio with pellets of a catalyst containing master batch of low density polyethylene (M1 of 2g/10 min at 190° under 2.16 kg (according to ASTM D1238E) containing 0.7% of the dibutyltin maleate and 5% of a phenolic antioxidant which is the tetrakis ester of pentaerythritol and bis 3,3-(3,5-ditertbutyl-4-hydroxyphenyl) propionic acid sold by Ciba Geigy under the Trade Mark IRGANOX 1010). In Example 5-7, before mixing with SLPE the master batch pellets had been treated at 80°C with a solution of the silane used in Ex 1 followed by evaporation of solvent to give loadings of the silane 0.25%, 0.5% and 1.0% w/w respectively in the pellets, while in Ex 8-10 before mixing with master batch the SLPE pellets were so treated. The mixed pellets were then melted and extruded into a tape 0.7-1.5 mm thick and about 6-6.5 cm wide. The tapes were inspected visually for imperfections eg shark skin imperfections or lumps of gel. Other samples of the mixed pellets were melted and formed into small dumbells, which were then immersed in water at 90°C for 2hr and overnight (16 hr) for curing. The cured dumbells were then tested for degree of curing by being heated to 200°C and their elongation under a force of 20 Newtons determined according to IEC 811-1-2.

For comparison (Comp Ex B), the same experiments were done without the added silane.

The results were as follows, the elongation being noted as the increase in length on extension after curing divided by the original length expressed as a percentage.

| Ex | % Silane on SLPE | % Silane in blend | Elongation % after the curing | | Tape Rating |
|---|---|---|---|---|---|
| | | | 2 hrs | overnight | |
| 5 | 0.013 | 0.0125 | 112 | 85 | good |
| 6 | 0.026 | 0.025 | 148 | 104 | good |
| 7 | 0.053 | 0.05 | 163 | 111 | very good |
| 8 | 0.25 | 0.247 | 165 | 114 | excellent |
| 9 | 0.5 | 0.475 | 213 | 118 | excellent |
| 10 | 1.0 | 0.95 | 256 | 143 | excellent |
| B | - | - | 135 | 99 | bad |

### Examples 11 and 12

The process of Ex 5-7 was repeated with a catalyst masterbatch of a blend of ethylene polymers (94.3%), di butyl tin maleate (0.7%), Antioxidant sold under the Trade Mark IRGANOX 1010 by Ciba Geigy (3.0%) and N,N¹-bis[3¹,5¹-di tert butyl-4¹-hydroxy phenyl) propion] hydrazide (2.0%) sold under the Trade Mark IRGANOX 1024. The ethylene polymers were themselves a blend of 87.4% low density homo polyethylene (Melt Index 2 g/10 min sold by BP Chemicals under UCBM-430) and 12.4% of an ethylene wt ethyl acrylate (EA) copolymer (with 18% wt EA units) (sold by BP Chemicals under DXM-170) and 0.2% bis [4-hydroxy-2-methyl-5 tert butyl phenyl] sulphide (sold by Monsanto under SANTONOX R Trade Mark]. The level of silane I added to the masterbatch in the manner as in Ex 5-7 was 2.5% and 5% respectively in Ex 11 and 12 and the masterbatches so treated were mixed in a 5:95 ratio with the SLPE pellets, melted and co extruded into tape as before; there were no surface imperfections or visible lumps of gel. The % silane I in the melt blend was 0.125 and 0.25% respectively for Ex 11 and 12. The melt blends were cured by exposure to water at 85°C for 18 hr.

### Example 13

The process of Ex 9-10 was repeated with a silyl polymer, which was an ethylene vinyl trimethoxy silane copolymer with 1.4% VTMs units and having a Melt Index of 1.5g/10min, and also contained 600 ppm of an antioxidant, which was 2,4,6-tris(41-hydroxy-3¹,5¹-di tert butyl benzyl)-1,3,5-trimethyl benzene, sold by Ciba Geigy under the Trade Mark IRGANOX 1330. Into the silyl polymer was soaked 0.3% by weight of silane I to give treated silyl polymer pellets. The catalyst masterbatch was the same as in Ex 9-10 apart from a further content of 2.5% wt of the IRGANOX MD 1024 product, used in Ex 11,12. The treated pellets and catalyst masterbatch were mixed in an extruder (150 mm with 18 L/D ratio) to coat a 35 mm copper conductor with a 1.1 mm insulation layer. The extruder screw speed was 12 rpm and the line speed was 50 m/min. The melt temperature was 188°C and the extruder temperature settings (°C) were 135-145, 160, 180 190 (Head) and 200 (Die). The coated conductor showed no surface imperfections. The coated conductor was cured in water for 6hr at 90°C. The cured conductor was tested at 130°C for 1hr for shrinkage according to BS 6889; the value obtained was 2% (within the 4% maximum limit). The cured conductor was tested for hot set (according to IEC-811-1-2) under conditions of 200°C, 15 min under 20 N cm²; a figure of 45% was obtained.

### Example 14 and Comp. Ex. C and D

The process of Examples 5-7 was repeated with a catalyst masterbatch of the same blend of ethylene polymers (99.3%) and dibutyltin maleate (0.7%) (but no phenolic antioxidant), the masterbatch, added in a 5:95 weight ratio to pellets of a silyl copolymer of ethylene and vinyl trimethoxy silane which was a low density polyethylene with 1.3% VTMS units and Melt Index 1.5 g/10 mins. The 5:95 mix obtained was melted, extruded into tape as before and the tape cross linked in water at 85°C for 16 hr. For Example 14 and Comp. Ex C the silyl copolymer before mixing was treated by soaking into it at 80°C for 16 hr, 0.3% (based on silyl copolymer weight) of a silane, which was Silane I (as in Example 1) for Example 14 and was octadecyltrimethoxy silane (ex. Wacker) for Comp. Ex C. In Comp. Ex D, no such silane treatment occurred.

Samples of the cross linked tapes were tested for oxidation Induction Time (OIT) at 200°C and 215°C in open aluminium pans as the sample holders. The OIT results (in minutes) were as follows: At 215°C, Ex 14, 4.6, Ex C 2.2, Ex D 2.9; at 200°C Ex 14 15.6, Ex C 5.4, Ex D 8.2

Dumbells were prepared in quintuplicate from the cross linked tapes and aged in an air circulating oven at 135°C, and their Tensile Strength and Elongation tested over 8 days. The average percentage reductions in these properties at various ageing times were as follows.

| Example | Time (h) | Percentage Tensile Strength Reduction | Percentage Elongation Reduction |
|---|---|---|---|
| Comp. Ex C | 20 | - 3.0 | 6.7 |
| | 68 | 3.1 | 14.2 |
| | 116 | 13.1 | 20.8 |
| | 188 | 60.0 | 84.6 |
| 14 | 20 | - 3.0 | 2.9 |
| | 68 | 1.0 | 8.4 |
| | 116 | 6.6 | 10.4 |
| | 188 | 22.4 | 20.0 |
| Comp Ex D | 20 | 5.6 | 13.3 |
| | 68 | 10.6 | 17.4 |
| | 116 | 14.6 | 20.6 |
| | 188 | 51.0 | 74.2 |

The presence of the silane I increases the oxidative stability and age resistance of the cross linked polymer compared to use of no silane or the octadecyltrimethoxy silane.

### Examples 15-17

The process of Examples 2-4 were repeated with a different silane I, namely 3-glycidoxypropyl-trimethoxysilane.

The results of the experiments were as follows with SLPE compositions containing 1% silane I and 0.2% catalyst (Example 15), 4% silane I and 0.2% catalyst (Example 16) and 4% silane I (Example 17 compared to 0.2% catalyst alone (Example A).

| Example | Gel Content After Time/hr | | | |
|---|---|---|---|---|
| | 0 | 1 | 2 | 24 |
| 15 | 45 | 73 | 74 | 77 |
| 16 | 3 | 70 | 73 | 78.5 |
| 17 | <1 | <1 | <1 | |
| A | 56 | | | |

### Example 18 and Comparative Example E

Insulated copper wire was prepared in the general manner of Example 13 but with the following changes. The catalyst masterbatch was as in Example 14 (i.e. no antioxidant or IRGANOX MD1024), and the silyl polymer was copolymer of ethylene and VTMs with 1.2% VTMS units and having a Melt Index of 0.4g/10 min, and also containing 500ppm IRGANOX 1330 antioxidant (as in Example 13). In Example 18, the silyl polymer also contained 0.3 wt% of silane 1 (as in Example 1) obtained by presoaking for 8 hours at 80°C, while in Comparative Example E, this silane was absent. The mixture of masterbatch and silyl polymer was coextruded in a 60mm Francis Shaw extruder with temperature settings of 150-185°C (head), line speed of 100m/min and screw speed of 52 rpm to coat a 0.6 mm diameter copper conductor with an insulation layer 0.7mm thick; the copper conductor had been preheated to about 80°C before the coating. The extruded conductor was cured in water at 135°C for 7 days. The ageing experiments were repeated with samples of the insulation stripped from the copper conductor before ageing. The Tensile Strength and elongation of the insulation before and after ageing were tested. The results were as follows:

| | Example 17 | Example |
|---|---|---|
| Percentage reduction of Tensile Strength | | |
| (i) with conductor | -4.0 | 58.2 |
| (ii) without conductor | 0.5 | 1.8 |

| Percentage reduction on Elongation | | |
|---|---|---|
| (i) with conductor | 11.5 | 59.0 |
| (ii) without conductor | 4.3 | 7.2 |

The properties of the insulation aged on the copper conductor deteriorated substantially in the absence of silane compared to those in its presence, showing the effect of the silane for stabilization of silyl polymers against deterioration in contact with copper, here copper wire.

### Example 19 and Comparative Examples F and G

The process of Example 14 was repeated with the silane replaced by an equal weight of silane 1 of Example 1 (Example 19) hexamethylene 1,6-bis (trimethyloxysilane) (Comparative Example F) or decamethylene 1,10-bis (trimethyloxysilane) (Comparative Example G). The averaged results of age testing for 9 days at 135°C were as follows:-

| Example | Ageing Time (hr) | % Tensile Strength Reduction | % Elongation Reduction |
|---|---|---|---|
| | 168 | 19.5 | 29.7 |
| Comparative F | 192 | 38.5 | 44.8 |
| | 216 | 51.8 | 71.5 |
| | 168 | 12.8 | 28.5 |
| Comparative G | 192 | 19.5 | 32.6 |
| | 216 | 30.3 | 40.8 |
| | 162 | 12.0 | 21.0 |
| Example 19 | 192 | 15.9 | 22.6 |
| | 216 | 20.0 | 25.7 |

## Claims

1. A polymer composition for use in the manufacture of thermoformed shaped articles which comprises (i) a silyl polymer, which is a cross linkable organic polymer having pendant hydrolysable silane groups, and (ii) an inhibitor to inhibit premature cross linking characterised in that said inhibitor (ii) is a silane I which is at least one of (a) a silane II with at least 2 silicon atoms, each attached to at least one hydrolysable group and bonded=together via an organic bridging group with at least one carbon backbone interrupted by at least one N, S, P or O atom, and (b) a silane III with at least one silicon atom attached to at least one hydrolyzable group and containing at least one epoxy group in a group bonded to Si containing 2-12 carbons.

2. A composition according to claim 1 characterised in that silane (ii) is of formula
[R¹ ₐR² ₃₋ₐSiR³]_{b}X II
where X is an O, Sₙ, N R⁴siR⁵₃__{c}R⁶_{c}, PR⁴SiR⁵₃__{c}R⁶c, NR⁷, PR⁷, NH(R⁸NH)_{d} or a heterocyclic group with at least one N, S or 0 ring atom, preferably a 2,4,6-tricarbonyl-1,3,5-triazinyl group,
each R¹ and each R⁶, which may be the same or different, represents a group such that Si-R¹ or Si-R⁶ are hydrolisable with water, R¹ being preferably alkoxy,
each R², each R⁵ and each R⁷, which may be the same or different, represents an alkyl, cycloalkyl, aryl or aralkyl group
each R³, each R⁴ and each R⁸ which may be the same or different, represents a divalent organic group, preferably alkylene,
each of a and c, which may be the same or different, is 1-3, preferably a being 3, b is at least 2, d is 0 or 1-4 and n is 1-6.

3. A composition according to claim 2 characterised in that silane (ii) is bis (3-trialkoxy silyl propyl) mono, di or tetra sulphide.

4. A composition according to claim 1 characterised in that silane (ii) is a 3-glycidoxypropyltrialkoxy silane.

5. A composition according to anyone of the preceding claims characterised in that it comprises a silanol condensation catalyst, preferably an organotin carboxylate.

6. A composition according to any one of the preceding claims characterised in that it comprises an inert thermoplastic polymer compatible with polymer (i), which is a polyethylene, or a mixture thereof with an ethylene vinyl acetate copolymer or an ethylene ethyl acrylate copolymer.

7. A masterbatch for mixing with a silyl polymer with hydrolysable silane groups, which masterbatch comprises an inert thermoplastic polymer compatible therewith, a silanol condensation catalyst and a precure inhibitor for said silyl polymer, characterised in that said inhibitor is a silane as defined in any one of claims 1-4.

8. A method of forming a cross linked polymer, which comprises contacting with water a composition as claimed in any one of claims 1-6, preferably a composition which has already been thermoformed.

## Patentansprüche

1. Polymerzusammensetzung zur Verwendung bei der Herstellung warmgeformter Formstücke, umfassend (i) ein Silylpolymer, das ein vernetzbares organisches Polymer mit anhängenden hydrolisierbaren Silangruppen ist und (ii) einen Inhibitor, um eine vorzeitige Vernetzung zu verhindern, dadurch gekennzeichnet, daß der Inhibitor (ii) ein Silan I ist, welches mindestens eines ist, von (a) einem Silan II, mit mindestens zwei Siliciumatomen, die jeweils an mindestens eine hydrolisierbare Gruppe gebunden sind, und die über eine organische Brückengruppe mit mindestens einem Hauptkettenkohlenstoff, unterbrochen von mindestens einem N-, S-, P- oder 0-Atom, aneinander gebunden sind und (b) einem Silan III, bei dem mindestens ein Siliciumatom an mindestens eine hydrolisierbare Gruppe gebunden ist und das mindestens eine Epoxygruppe in einer an Si gebundenen, 2-12 Kohlenstoffe enthaltenden Gruppe enthält.

2. Zusammensetzung nach Anspruch 1, dadurch gekennzeichnet, daß das Silan (ii) folgende Formel hat
[R¹ ₐR² ₃₋ₐSiR³]_{b}X II
wobei X ein O, Sₙ, N R⁴SiR⁵_{3-c}R⁶_{c}, PR⁴SiR⁵_{3-c}R⁶_{c}, NR⁷, PR⁷, NH(R⁸NH), ist oder eine heterozyklische Gruppe mit mindestens einem N-, S- oder O-Ringatom, vorzugsweise eine 2,4,6, -Tricarbonyl-1,3,5-triazinylgruppe,
jedes R¹ und jedes R⁶, die gleich oder verschieden sein können, eine Gruppe sind, so daß Si-R¹ oder Si-R⁶ mit Wasser hydrolisierbar sind, wobei R¹ vorzugsweise Alkoxy ist,
jedes R², jedes R⁵ und jedes R⁷, die gleich oder verschieden sein können, eine Alkyl-, Cykloalkyl-, Aryl- oder Aralkylgruppe darstellen,

3. Zusammensetzung nach Anspruch 2, dadurch gekennzeichnet, daß das Silan (ii) Bis(3-trialkoxysilylpropyl)-mono-, -di- odertetrasulfid ist.

4. Zusammensetzung nach Anspruch 1, dadurch gekennzeichnet, daß das Silan (ii) ein 3-Glycidoxypropyltrialkoxysilan ist.

5. Zusammensetzung nach einem der vorhergehenden Ansprüche, dadurch gekennzeichnet, daß sie einen Silanolkondensationskatalysator umfaßt, vorzugsweise ein Organozinncarboxylat.

6. Zusammensetzung nach einem der vorhergehenden Ansprüche, dadurch gekennzeichnet, daß sie ein inertes thermoplastisches Polymer umfaßt, das mit Polymer (i) kompatibel ist, welches ein Polyethylen ist oder ein Gemisch hiervon mit einem Ethylenvinylacetat-Copolymer oder einem EthylenethylacrylatCopolymer.

7. Masterbatch zum Vermischen mit einem Silylpolymer mit hydrolisierbaren Silangruppen, wobei der Masterbatch ein inertes thermoplastisches Polymer umfaßt, das damit kompatibel ist, einen Silanolkondensationskatalysator und einen Inhibitor gegen vorzeitig einsetzende Härtung für das Silylpolymer, dadurch gekennzeichnet, daß der Inhibitor ein in einem der Ansprüche 1 - 4 definiertes Silan ist.

8. Verfahren zur Bildung eines vernetzbaren Polymers, umfassend das Inkontaktbringen einer Zusammensetzung nach einem der Ansprüche 1 - 6 mit Wasser, vorzugsweise einer Zusammensetzung, die schon warmgeformt wurde.

## Revendications

1. Composition polymère destinée à l'emploi dans la fabrication d'articles en forme, thermoformés, qui comprend :
(i) un polymère silylé qui est un polymère organique réticulable ayant des groupes silane hydrolysables pendants, et
(ii) un inhibiteur pour inhiber une réticulation prématurée,
caractérisée en ce que
cet inhibiteur (ii) est un silane (I) qui est au moins
a) un silane II avec au moins deux atomes de silicium, attachés chacun à au moins un groupe hydrolysable et reliée ensemble par l'intermédiaire d'un groupe de pontage organique avec au moins un squelette carboné interrompu . par au moins un atome de N, S, F ou O et
b) un silane III ayant au moins un atome de silicium attaché à au moins un groupe hydrolysable et contenant au moins un groupe époxyde dans un groupe relié à Si, contenant de 2 à 12 atomes de carbone.

2. Composition selon la revendication 1,
caractérisée en ce que le silane (ii) a la formule ;
[R¹ ₐR² ₃₋ₐSiR³]_{b}X (II)
dans laquelle
X est un O, Sn, N R⁴SiR⁵3-cR⁶c, PR⁴SiR⁵3-cR⁶c, NR⁷, PR⁷, NH(R⁸NH)d ou un groupe hétérocyclique ayant au moins un atome de cycle N, S ou O, de préférence un groupe 2,4,6tricarbonyle 1,3,5-triazinyle ;
chaque R¹ et chaque R⁶, qui peuvent être identiques ou différents, représentent un groupe tel que SiR¹ ou Si-R⁶ soit hydrolysable avec de l'eau, R¹ étant de préférence un alkoxy ;
chaque R², chaque R⁵ et chaque R⁷, qui peuvent être identiques ou différents, représentent un groupe alkyle, un
groupe cycloalkyle, un groupe aryle ou un groupe aralkyle ;
chaque R³, chaque R⁴ et chaque R⁸, qui peuvent être identiques ou différents, représentent un groupe organique divalent, de préférence alkylène ;
chaque a et c, qui peuvent être identiques ou différents, sont de 1 à 3, de préférence a étant de 3, b étant au moins de 2, d est de 0 ou de 1 à 4 et n est de 1 à 6.

3. Composition selon la revendication 2,
caractérisée en ce que
le silane (ii) est un mono-, di- ou tétrasulfure de (3trialkoxysilylpropyle).

4. Composition selon la revendication 1,
caractérisée en ce que
le silane (ii) est un 3-glycidoxypropyltrialkoxy silane.

5. Composition selon l'une quelconque des revendications précédentes,
caractérisée en ce qu'
elle comprend un catalyseur de condensation de silanol_{,} de préférence un organostanno-carboxylate.

6. Composition selon l'une quelconque des revendications précédentes,
caractérisée en ce qu'
elle comprend un polymère thermoplastique inerte compatible avec le polymère (i) qui est un polyéthylène ou un mélange de celui-ci avec un copolymère éthylène/acétate de vinyle ou avec un copolymère éthylénel/acrylate d'éthyle.

7. Lot principal pour mélanger avec un polymère silylé ayant des groupes silane hydrolysables, lequel lot principal comprend un polymère thermoplastique inerte compatible avec celui-ci, un catalyseur de condensation de silanol et un inhibiteur de pré-durcissement pour ce polymère silylé, caractérisé en ce que
cet inhibiteur est un silane comme défini dans l'une quelconque des revendications 1 à 4.

8. Procédé pour former un polymère réticulé, qui comprend le fait de mettre en contact avec de l'eau une composition telle que revendiquée dans l'une des revendications 1 à 6, de préférence une composition qui a déjà été thermoformée.
